# EUROPÄISCHE PATENTSCHRIFT

(11) **EP 2 956 732 B1**
(45) Veröffentlichungstag und Bekanntmachung des Hinweises auf die Patenterteilung: **09.05.2018**
(21) Anmeldenummer: 14705021.5
(22) Anmeldetag: 23.01.2014
(51) Int. Cl.: F41G 1/41, F41G 11/00

(54) **UNIVERSELLE ZIELFERNROHRMONTAGE FÜR HANDFEUERWAFFEN**
UNIVERSAL RIFLESCOPE MOUNT FOR HAND-HELD WEAPONS
SYSTÈME UNIVERSEL DE MONTAGE DE LUNETTES DE VISÉE POUR ARMES À FEU DE POING

(30) Priorität: 15.02.2013 DE 102013002606
(43) Veröffentlichungstag der Anmeldung: 23.12.2015
(73) Patentinhaber: Dentler, Daniel, 88229 Leutkirch (DE)
(72) Erfinder: Dentler, Daniel, 88229 Leutkirch (DE)
(74) Vertreter: Riebling, Peter
(86) Internationale Anmeldenummer: PCT/EP2014/000163
(87) Internationale Veröffentlichungsnummer: WO 2014/124728

(56) Entgegenhaltungen:
- US-A1- 2012 085 014
- US-A1- 2013 008 073
- US-B1- 7 647 720
- US-B1- 8 240 075
- US-B1- 8 296 991

## Beschreibung

Die Erfindung betrifft eine universelle Zielfernrohrmontage für Handfeuerwaffen nach dem Oberbegriff des Patentanspruches 1.

Eine derartige Zielfernrohrmontage ist beispielsweise mit dem Gegenstand der DE 20 2011 002 180 U1 bekannt geworden. Die bekannte Zielfernrohrmontage besteht aus einer auf dem Profil der Waffe über einen Klemmverschluss zu montierenden Grundschiene, die an ihrer Oberseite einen in Längsrichtung weisenden Profilkanal aufweist, der die Aufnahme für das dort einzulegende und zu befestigende Zielfernrohr aufweist.

Damit kann das Zielfernrohr in den Aufnahmekanal eingelegt und dort einmalig fixiert werden.

Die Grundschiene wird ebenfalls nur einmalig mit dem Profil der Waffe über die Klemmverschlüsse verbunden. Die Grundschiene ist demnach einteilig und hat den Nachteil, dass einer Waffe nur ein einziges Zielfernrohr einmalig zugeordnet werden kann. Bei der Zuordnung des Zielfernrohres auf die einteilige Grundschiene nach diesem Stand der Technik ist es erforderlich, die Waffe zusammen mit dem Zielfernrohr einzuschießen und das Zielfernrohr entsprechend zu justieren, wobei die Justage des Zielfernrohres an der Einstelleinrichtung des Zielfernrohres stattfindet.

Will nun der Benutzer der Waffe das Zielfernrohr auf einer zweiten Waffe montieren, werden die Klemmhebel der einteiligen Grundschiene gelöst und die Grundschiene wird zusammen mit dem Zielfernrohr auf das Profil einer zweiten Waffe aufgesetzt. Damit besteht aber der Nachteil, dass das Zielfernrohr nicht mehr auf die zweite Waffe eingeschossen und einjustiert ist, wodurch eine neue Einjustierung des Zielfernrohres notwendig ist.

Damit geht auch die Zielfernrohr-Justage in Bezug zur ersten Waffe verloren und ist nur noch auf die zweite Waffe anzuwenden. Will der Benutzer nun das Zielfernrohr auf die erste Waffe zurücksetzen oder auf eine dritte Waffe montieren, muss bei jedem Umsetzen des Zielfernrohres die Einstellvorrichtung des Zielfernrohres in Bezug zu der einteiligen Grundschiene nach der DE 20 2011 002 180 U1 neu eingestellt werden.

Mit dem Gegenstand der US 2 576 007 A sind Einstellmittel zum Einstellen des Zielfernrohres bekannt, wobei eine Justierplatte nicht einstellbar auf der Waffe angeordnet ist. Die Justierung erfolgt über eine Verschiebung des Zielfernrohrs selbst.

Bei der US 2,576,007 A handelt es sich um einen schlittenartigen Aufbau zur Halterung eines Zielfernrohrs mit Hilfe von zwei Halbschellen, die an einem Schlitten befestigt sind. Der Schlitten ist in Längsnuten einstellbar und feststellbar auf einem waffenseitigen Bügel befestigt, wobei das Zielfernrohr an seinem hinteren Ende auf in der Höhe einstellbaren Schraubbolzen aufliegt und an seinem vorderen Ende in einer prismenförmigen Aufnahme aufgenommen ist.

Hieraus ergibt sich, dass eine Entfernung des Zielfernrohrs nur dann möglich ist, wenn die Halteschraube vollkommen entfernt wird, um das gesamte Oberteil mit den Halbschalen von der waffenseitigen Grundschiene zu entfernen. Eine Justierplatte ist nicht offenbart. Eine Einstellung in mindestens zwei zueinander senkrechten Ebenen ist nicht vorgesehen.

Mit der US 6 591 538 B2 ist ein Zielfernrohrmontage bekannt, bei der eine Betätigung der Einstellmittel nur bei abgenommenem Zielfernrohr möglich ist. Eine Umsetzung des Zielfernrohrs auf eine andere Waffe ohne erneute Betätigung der Einstellmittel ist deshalb nicht möglich.

Damit ist es nicht möglich, eine universelle Zielfernrohrmontage für Handfeuerwaffen der allgemeinen Art so auszubilden, bei der es nicht mehr erforderlich ist, ein einmal auf eine Waffe eingestelltes Zielfernrohr neu bei der Umsetzung des Zielfernrohrs auf eine andere Waffe erneut einzustellen.

Die US2011/0099877A zeigt einen Zubehörhalter, der einem Zielfernrohr zugeordnet werden kann. Der Zubehörhalter dient zur Halterung eines Restlichtverstärkers. Das Zielfernrohr selbst ist mit einem festen, nicht einstellbaren Halter auf der Waffe montiert. Aus der US 7 647 720 B1 ist eine dreidimensionale Verstellung eines Zielfernrohres zu entnehmen bei welcher das Zielfernrohr auf einer waffenseitigen Justierplatte befestigt ist. Das Zielfernrohr selbst ist mit seitlichen Halteklammern auf einer oberen Picatinny-Schiene gehalten. Die Picatinny-Schiene ist eine nach NATO-Standard genormte, gezahnte Schiene zur schnellen und wiederholgenauen Montage von Zubehörteilen auf Schusswaffen. Sie lässt jedoch in Längsrichtung der Schiene sich erstreckende, unterschiedliche Montagelagen zu. Für den erfindungsgemässen Zweck, der Umsetzung eines Zielfernrohres auf verschiedene Waffen, ist deshalb die Montage auf einer Picatinny-Schiene nicht geeignet, weil das Zielfernrohr beim Umsetzen auf eine andere waffenseitige Halterung in einer anderen Längsposition auf der Picatinny-Schiene befestigt werden könnte. Diese Kritik gilt auch für die US 8 296 991 B1 und die US 2013/0008073 A1. Beide bekannten Montagen sehen eine Halterung des Zielfernrohrs an einer oberen Picatinny-Schiene und die Halterung der Montage auf der Waffe mit einer unteren Picatinny-Schiene vor. Eine punkt- und wiederholgenaue Befestigung eines von der Montage abgenommenen Zielfernrohrs, das auf einer andere Montage auf einer anderen Waffe umgesetzt werden soll, ist somit nicht gegeben. Der Erfindung liegt deshalb ausgehend von der US 8296991 B1 die Aufgabe zugrunde, eine universelle Zielfernrohrmontage für Handfeuerwaffen der allgemeinen Art auszubilden, bei der es nicht mehr erforderlich ist, dass ein einmal auf eine Waffe eingestelltes Zielfernrohr neu bei der Umsetzung des Zielfernrohrs auf eine andere Waffe eingestellt werden muss.

Zur Lösung der gestellten Aufgabe ist die Erfindung durch die technische Lehre des Anspruches 1 gekennzeichnet.

Die Erfindung sieht demnach eine Zielfernrohrmontage für Handfeuerwaffen bestehend aus mindestens einer auf einer Waffe befestigten Grundschiene vor, die mit einer am Zielfernrohr verbundenen Befestigung lösbar verbunden ist, wobei die auf der Waffe montierte Grundschiene mindestens aus einer waffenseitigen Gegenplatte oder aus waffenseitigen Halterungselementen besteht, die mit der Waffe verbunden ist/sind, und aus einer auf der waffenseitigen Gegenplatte oder den Halterungselementen in mindestens zwei zueinander senkrechten Ebenen einstellbar gehaltenen Justierplatte besteht, auf der das Zielfernrohr über eine Aufnahmeschiene oder andere zielfernrohrseitige Halterungselemente lösbar befestigt ist, wobei an der Oberseite der Justierplatte eine Trennebene ausgebildet ist, in deren Bereich das Zielfernrohr mit seiner Aufnahmeschiene oder anderen zielfernrohrseitigen Halterungselementen von der Waffe entfernbar ist und auf eine andere Waffe umsetzbar ist, wobei die auf der Justierplatte zu montierende Aufnahmeschiene oder andere zielfernrohrseitige Halterungselemente mit Befestigungselementen lösbar auf der Justierplatte befestigt ist/sind und die Zuordnung der Einstellung der Justierplatte zu der stets fest waffenseitig verbundenen Gegenplatte für diese und die andere Waffe und das dazu gehörende Zielfernrohr gleich bleibt. Ein Merkmal der Erfindung ist demnach, dass die auf der Waffe montierte Grundschiene mindestens zweiteilig ausgebildet ist und aus einer waffenseitigen Gegenplatte besteht, die stets an der Waffe montiert bleibt und aus einer auf der Gegenplatte einstellbar gehaltenen Justierplatte, die ebenfalls nach einmaliger Einstellung stets auf der Waffe verbleibt und auf der das Zielfernrohr lösbar und auswechselbar befestigt ist.

Mit dieser technischen Lehre wird eine neuartige Trennebene definiert, die an der Oberseite der mindestens zweiteiligen waffenseitigen Grundschiene ausgebildet ist und vorsieht, dass das Zielfernrohr mit seiner zielfernrohrseitigen Befestigung, die nachfolgend der einfacheren Beschreibung wegen als Aufnahmeschiene bezeichnet wird, stets von der Waffe entfernt werden und auf eine andere Waffe umgesetzt werden kann, ohne dass es zu einer Veränderung der Justierung des Zielfernrohres zu der waffenseitigen Grundschiene kommt. Dies erfolgt dadurch, dass bei der mindestens zweiteiligen Grundschiene die der waffenseitigen Gegenplatte zugeordnete und oberhalb der waffenseitigen Gegenplatte angeordnete Justierplatte in mindestens zwei zueinander senkrechten Ebenen einstellbar ausgebildet ist. Damit ist es nun erstmals möglich, dass mehrere Waffen gleicher oder unterschiedlicher Hersteller nur mit einem einzigen Zielfernrohr ausgestattet werden können, ohne dass beim Umsetzen des Zielfernrohres auf eine andere Waffe ein Präzisionsverlust stattfindet und ohne dass eine Änderung der Einstellungen am Zielfernrohr vorgenommen werden muss.

Das heißt, es kann jedes Zielfernrohr auf jede beliebige Waffe durch nur einmaliges Einschießen beliebig oft gewechselt werden, ohne dass ein Präzisionsverlust auftritt.

Kommt ein neues Zielfernrohr hinzu, muss dieses auf nur einer dieser Waffen eingeschossen werden und passt somit auf allen anderen Waffen, ohne Präzisionsverlust.

Die genannte universelle Zielfernrohrmontage ist für beliebige Handfeuerwaffen anwendbar, wie zum Beispiel für Jagd- und Sportwaffen, aber auch für Kurzwaffen, Pistolen, Revolver, Gewehre, Karabiner und Schnellfeuerwaffen. Sie ist nicht nur für Sport- und Jagdwaffen anwendbar, sondern auch für alle Arten von Handfeuerwaffen. Ein Merkmal der Erfindung ist demnach, dass die auf der Waffe montierte Grundschiene mindestens aus einer waffenseitigen Gegenplatte oder aus waffenseitigen Halterungselementen besteht, die mit der Waffe verbunden ist/sind und aus einer auf der Gegenplatte oder den Halterungselementen einstellbar gehaltenen Justierplatte auf der das Zielfernrohr mittelbar oder unmittelbar befestigt ist.

Bevorzugt wird eine zweiteilige Grundschiene verwendet, die aus einer waffenseitig stets fest montierten Gegenplatte (oder zu dieser äquivalenten Halterungselementen) besteht, auf der eine Justierplatte angeordnet ist, die in mindestens zwei zueinander senkrechten Raumachsen einstellbar ist. Auf der Justierplatte ist eine Aufnahmeschiene fest angeordnet, die ihrerseits fest mit dem Zielfernrohr verbunden ist.

Die Verwendung einer Aufnahmeschiene zur Halterung des Zielfernrohres ist jedoch nur beispielhaft zu verstehen. Statt einer Aufnahmeschiene können auch andere Befestigungsarten verwendet werden, wie zum Beispiel zwei voneinander beabstandete Stehbolzen, die lösbar mit der Justierplatte verbindbar sind oder die Aufnahmeschiene ist direkt in den Körper des Zielfernrohrs integriert.

Die Trennebene befindet sich nämlich an der Unterseite der zielfernrohrseitigen Aufnahmeschiene und an der Oberseite der in mindestens zwei Raumachsen einstellbaren Justierplatte, sodass das Zielfernrohr mit der am Zielfernrohr befestigten Aufnahmeschiene stets von der Waffe entfernt werden kann und auf eine andere Waffe umgesetzt werden kann.

Jeder Waffe ist also eine zweiteilige Grundschiene zugeordnet, wobei erfindungsgemäß nun beim Einjustieren der Waffe die Justierplatte auf der Grundschiene auf das Zielfernrohr eingestellt wird.

Der Begriff "zweiteilige Grundschiene" umfasst auch eine einteilige Grundschiene, deren zweiter Teil - die "waffenseitige Gegenplatte" unmittelbar auf der Waffe eingearbeitet ist oder nur aus waffenseitig angeordneten Befestigungselementen, wie Bolzen oder Klemmelementen besteht, welche die Funktion der waffenseitigen Gegenplatte übernehmen. Der Begriff "Platte" in der waffenseitigen Gegenplatte ist demnach im weitesten Sinn zu verstehen. Deshalb wird im kennzeichnenden Teil des Anspruches 1 diese Art der waffenseitigen Befestigung allgemein als "Halterungselemente" bezeichnet.

Die Zuordnung der Einstellung der Justierplatte zu der stets fest waffenseitig verbundenen Gegenplatte bleibt für jede Waffe und für das dazugehörige Zielfernrohr stets gleich.

Wird demnach das Zielfernrohr von der einen Waffe entfernt und auf eine andere Waffe umgesetzt, dann ist auf dieser anderen Waffe die Einstellung zwischen Justierplatte und Gegenplatte genau so eingerichtet, dass das Zielfernrohr mit dieser Einstellung auf der zweiten Waffe ausgerichtet und eingeschossen ist. Es ist demnach vorgesehen, dass bei der mindestens zweiteiligen, waffenseitig angeordneten Grundschiene die Justierplatte über beliebige Einstellmittel einstellbar zu der auf der Waffe fest befestigten Gegenplatte ausgebildet ist.

Als Einstellmittel können beliebige Einstellmittel verwendet werden, wie zum Beispiel Keilmittel, Schrauben, Spindelelemente, Exzenterelemente, Dreh- oder Spannexzenter und dglm.

Der einfacheren Beschreibung wegen werden diese Einstellmittel später nicht mehr gesondert erwähnt, weil sie in das Belieben des Fachmannes gestellt sind.

Die zweiteilige Grundplatte besteht bevorzugt aus einem Metallmaterial, kann jedoch auch aus Kunststoff oder einem Metall- Kunststoffverbund bestehen. Die waffenseitig befestigte Gegenplatte wird auf der Waffe mit beliebigen Befestigungsmitteln befestigt, wie zum Beispiel einer Verschraubung, einer Klemmverbindung, einer Klebeverbindung und dergleichen. Es ist auch möglich dass diese Gegenplatte bereits auf einer Waffe angearbeitet ist oder lediglich durch waffenseitige Befestigungselemente ersetzt ist. Nach der erstmaligen Montage kann sie auf der Waffe verbleiben.

Die Justierplatte ist gegenüber der waffenseitig fest befestigten Gegenplatte einstellbar ausgebildet.

Die Ausrichtung der Justierplatte ist auch über eine Drehbewegung möglich und nicht nur parallel seitlich durch eine Verschiebung, sondern auch durch eine schräg seitliche Verschiebung.

Die auf der Justierplatte lösbar zu montierende Aufnahmeschiene ist mit beliebigen Befestigungselementen auf der Justierplatte befestigt. Solche lösbaren Befestigungselemente sind zum Beispiel Klemmschrauben, Klemmhebel, Klemmexzenter, Drehexzenter oder Keilelemente.

Wesentlich ist, dass ein form - und kraftschlüssiger Sitz zwischen der zielfernrohrseitigen Aufnahmeschiene und der waffenseitigen Justierplatte im befestigten Zustand erreicht wird.

Die Erfindung unterscheidet sich im Vergleich zur US 6 591 538 B2 darin, dass oberhalb der waffenseitigen, einstellbaren Justierplatte die Trennebene für die Abnahme des Zielfernrohrs ausgebildet ist, so dass es damit nun erstmals möglich ist, dass mehrere Waffen gleicher oder unterschiedlicher Hersteller nur mit einem einzigen Zielfernrohr ausgestattet werden können, ohne dass beim Umsetzen des Zielfernrohrs auf eine andere Waffe ein Präzisionsverlust stattfindet und ohne dass eine Änderung der Einstellungen am Zielfernrohr vorgenommen werden muss.

Dass heißt, es kann jedes Zielfernrohr auf jede beliebige Waffe durch nur einmaliges Einschießen beliebig oft gewechselt werden, ohne dass ein Präzisionsverlust auftritt.

Dies liegt nach der Erfindung darin, dass auf der Waffe selbst die Gegenplatte mit der darüber liegenden Justierplatte befestigt ist und die Justierplatte einmalig auf ein bestimmtes Zielfernrohr eingestellt wird. Somit verbleibt die Justierplatte, die einmalig auf die Waffe mit einem dazugehörenden Zielfernrohr eingestellt wurde, immer auf der Waffe selbst.

Wird nun das Zielfernrohr mit der darunter liegenden Aufnahmeschiene oder anderen zielfernrohrseitigen Halterungselementen aus ihrem spielfreien und formschlüssigen Sitz von der Oberseite der Justierplatte abgehoben und auf eine andere Waffe gesetzt, wird vorausgesetzt, dass auf der anderen Waffe die Justierplatte ebenso auf das Zielfernrohr eingestellt ist.

Damit ist es nun erstmals möglich, dass man ein oder mehrere unterschiedliche Zielfernrohre auf beliebige Waffen umsetzen kann, weil jeder Waffe die einmalig eingestellte Justierplatte zugeordnet ist, die auf der Waffe verbleibt und die fest eingestellt bleibt.

Damit besteht auch der weitere Vorteil, dass man verschiedene Zielfernrohre auf jeweils eine auf die Waffe eingestellte Justierplatte aufsetzen kann, ohne dass es zu einem Präzisionsverlust kommt.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
Figur 1: schematisiert die Seitenansicht einer universellen Zielfernrohrmontage nach der Erfindung in einem auf einer ersten Waffe eingerichteten Zustand
Figur 2: die Draufsicht auf die Anordnung nach Figur 1 im eingerichteten und justierten Zustand
Figur 3: die Stirnansicht auf die erste Waffe nach Figuren 1 und 2
Figur 4: die Draufsicht auf die Anordnung einer zweiten Waffe, wenn das Zielfernrohr der ersten Waffe auf eine zweite Waffe montiert wird
Figur 5: die Stirnansicht der Zielfernrohrmontage auf die zweite Waffe
Figur 6: die Seitenansicht der Zielfernrohrmontage auf der zweiten Waffe
Figur 7: perspektivische Darstellung der universellen Zielfernrohr-Montage mit Darstellung unterschiedlicher Waffen.

In den Darstellungen ist schematisiert ein Waffenlauf 1 dargestellt, der mit seiner Längsachse 2 in eine bestimmte Pfeilrichtung 3 zeigt und den Schuss in dieser Pfeilrichtung abgibt.

Dem Waffenlauf 1 ist ein Zielfernrohr 4 zugeordnet, das mit seiner optischen Achse 5 auf das zu treffende Ziel (zum Beispiel bei einer Entfernung von 100 Metern) ausgerichtet ist, wobei die optische Achse 5 mit der Pfeilrichtung 6 im Bereich von etwa 100 Metern mit der Schussabgabe in Pfeilrichtung 3 übereinstimmen muss. Die Waffe ist demnach zusammen mit dem Zielfernrohr auf ein 100 m entferntes Ziel eingeschossen

Erfindungsgemäß ist auf dem Waffenlauf 1 eine mindestens zweiteilige Grundschiene 10 montiert, die aus einer unteren, direkt auf der Waffe befestigten Gegenplatte 12 besteht, die eine Längsachse 22 ausbildet.

Auf der Gegenplatte 12 ist eine in mindestens zwei Raumebenen einstellbare Justierplatte 11 aufgesetzt und mithilfe von Einstellmitteln einstellbar und feststellbar ausgebildet. In einer bevorzugten Ausgestaltung ist sie in der X-Y-Ebene verschiebbar und zusätzlich in der Neigung einstellbar. Es handelt sich demnach um eine in drei Raumachsen (X, Y, Z) einstellbare Justierplatte.

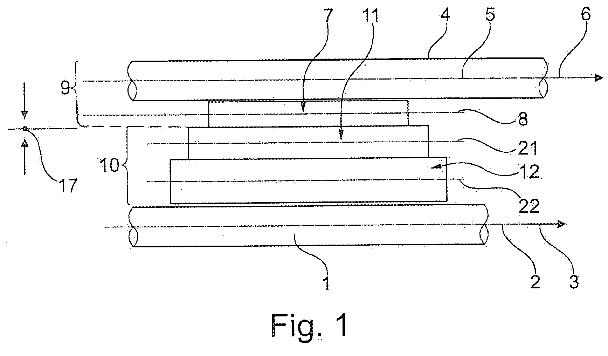

Auf der einstellbaren Justierplatte 11 ist gemäß Figur 1 eine Aufnahmeschiene 7 lösbar befestigt, die fest am Zielfernrohr 4 verbleibt.

Erfindungsgemäß ist demnach die Trennebene 17 bei der universellen Zielfernrohrmontage an der Unterseite der zielfernrohrseitigen Aufnahmeschiene 7 und der Oberseite der waffenseitig einstellbar ausgebildeten Justierplatte 11 ausgebildet.

Das Zielfernrohr bildet demnach das Oberteil 9 der Zielfernrohrmontage. Das Oberteil besteht aus dem Zielfernrohr 4 selbst und der mit dem Zielfernrohr fest verbundenen Aufnahmeschiene 7.

Die Längsachse der Justierplatte 11 ist mit 21 bezeichnet. Die Längsachse der Aufnahmeschiene ist mit 8 bezeichnet.

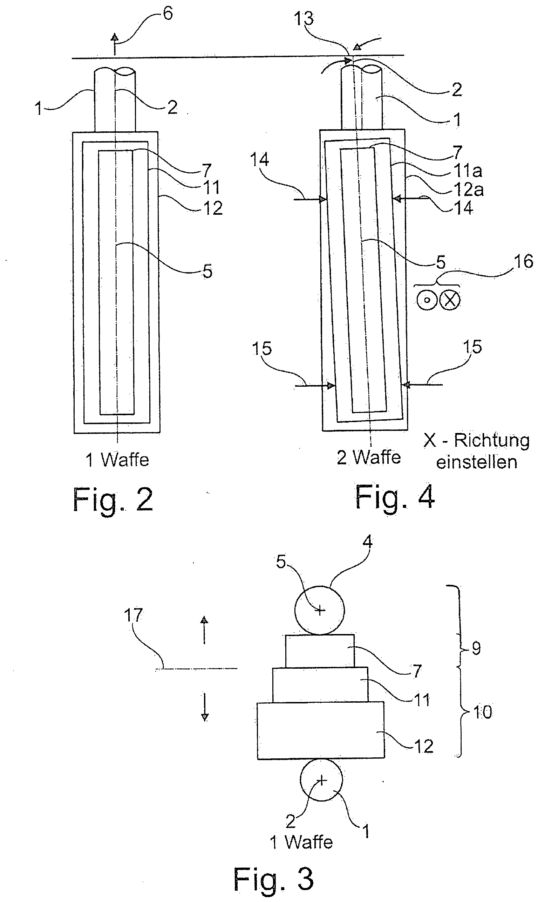

Die Figuren 2 und 3 zeigen die Draufsicht und die Stirnansicht eines auf den Waffenlauf 1 justierten Zielfernrohrs 4.

Hierbei ist erkennbar, dass die optische Achse 5 des Zielfernrohrs 4 mit etwa der Längsachse 2 des Waffenlaufs 1 übereinstimmt, sodass das Zielfernrohr in der gleichen Längsachse blickt wie die Schussabgabe in Pfeilrichtung 3 erfolgt.

Dies ist durch die Pfeilrichtung 6 gekennzeichnet.

Figur 3 zeigt die Stirnansicht, bei der die Zuordnung der genannten Teile erkennbar ist. Dabei ist wesentlich, dass die Trennebene 17 zwischen der Oberseite der Justierplatte 11 und der Unterseite der zielfernrohrseitigen Aufnahmeschiene 7 ausgebildet ist.

Soll eine solche Anordnung auf eine zweite Waffe umgesetzt werden, dann werden die genannten Teile in der Trennebene 17 voneinander getrennt, und das Oberteil 9 (inklusive dem Zielfernrohr 4) wird auf eine zweite Waffe aufgesetzt. Dies ergibt sich aus den Figuren 4 bis 6.

In den Figuren 4 bis 6 ist die zweite Waffe dargestellt. Alle Teile der zweiten Waffe sind mit dem Buchstaben "a" bezeichnet. Es ist erkennbar, dass möglicherweise nun die waffenseitige Justierplatte 11a und die auf der zweiten Waffe montierte Gegenplatte 12a versetzt zum Waffenlauf der zweiten Waffe ausgebildet sind. Dies ergibt sich durch den Abweichungswinkel 13, der sich in der X-Richtung einstellt.

Nunmehr werden die Einstellmittel 14, 15, 16 betätigt, wobei zum Beispiel die Einstellmittel 14, 15 in der X-Y-Ebene wirken, während die Einstellmittel 16 in der hierzu senkrechten Z-Ebene wirken.

Diese Einstellmittel lassen die Justierplatte 11a neu einstellen, sodass diese eine korrekte Zuordnung zum Zielfernrohr 4 erhält. Durch die einmalige Einstellung der Justierplatte 11a auf das Zielfernrohr 4 wird damit wiederholbar und einmalig das Zielfernrohr 4 auf die einmalig eingestellte Justierplatte 11a zugeordnet, und diese Einstellung muss nicht mehr verändert werden.

Somit kann das Zielfernrohr 4 mit seiner Aufnahmeschiene 7 auf eine waffenseitig eingestellte Justierplatte 11a und die dazugehörende Gegenplatte 12a der zweiten Waffe aufgesetzt werden und ist sofort richtig eingestellt, ohne dass es weiterer Einstellarbeiten bedarf.

Selbstverständlich lässt sich dieser Vorgang auch mit weiteren Waffen wiederholen, wobei stets notwendig ist, dass auf jeder Waffe eine mindestens zweiteilige Grundschiene 10 angeordnet ist, die aus einer fest mit der Waffe verbundenen Gegenplatte 12 und einer einstellbaren, mit der Gegenplatte verbundenen Justierplatte 11a oder 11 gebildet ist.

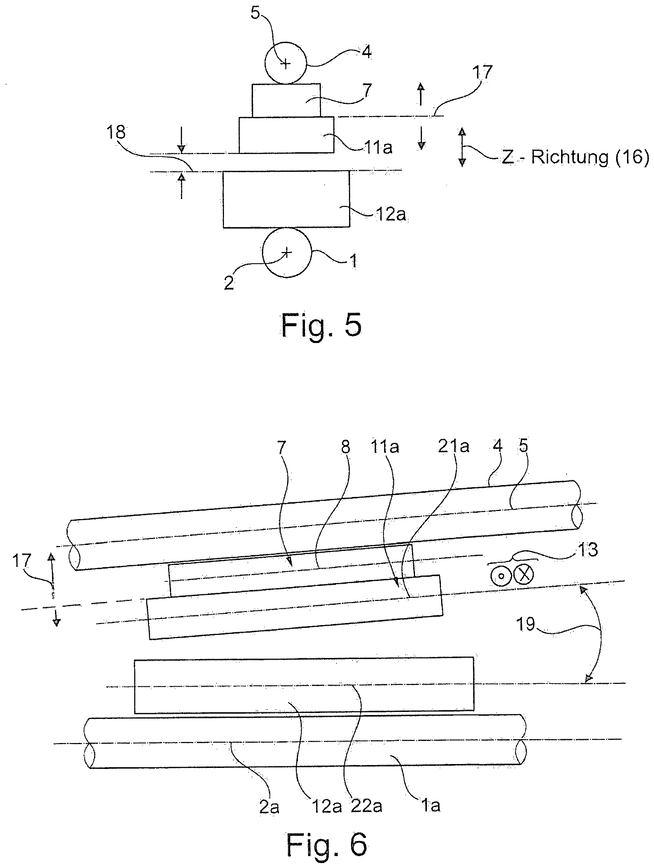

Die Figuren 5 und 6 zeigen die Einstellarbeiten, die möglicherweise einmalig an der zweiten Waffe notwendig sind. Hier ist in Figur 5 dargestellt, dass ein Einstellweg 18 in der Z-Richtung mit dem Einstellmittel 16 eingestellt wird.

Der Buchstabe a bedeutet immer, dass das Teil zur zweiten Waffe gehört.

Figur 6 zeigt den in Z-Richtung sich ergebenden Abweichungswinkel 19, der durch einmalige Einstellung der bei der zweiten Waffe verbleibenden Justierplatte 11a eingestellt wird. Die Längsachse 21a wird dementsprechend eingerichtet. Dementsprechend verändern sich natürlich auch die anderen Längsachsen, wie in Figur 6 eingezeichnet.

Das gilt insbesondere für die Längsachse 21a der Justierplatte 11a.

Die vorliegende Erfindung macht deutlich, dass eine universelle Zielfernrohrmontage für beliebige Handfeuerwaffen dadurch gegeben ist, dass das Zielfernrohr mit einer zugeordneten Aufnahmeschiene 7 oder einer anderen lösbaren Halterung auf einer mindestens zweiteiligen Grundschiene gehalten ist und dass die Grundschiene aus einer fest mit der Waffe verbindbaren Gegenplatte und einer hierauf in mindestens zwei Raumebenen verschiebbaren und einstellbaren sowie feststellbaren Justierplatte 11 besteht.

Auf die Justierplatte 11 wird dann die zielfernrohrseitige Aufnahmeschiene 7 lösbar, form- und kraftschlüssig, sowie spielfrei befestigt.

Wesentlich ist demnach, dass an der Oberseite der mindestens zweiteiligen, waffenseitigen Grundschiene 10 eine Trennebene 17 ausgebildet ist, in deren Bereich das Zielfernrohr 4 mit seiner zielfernrohrseitigen Befestigung (z. B. als Aufnahmeschiene 7) von der Waffe 1 entfernbar ist und auf eine andere Waffe umsetzbar ist, ohne dass es zu einer Veränderung der Justierung des Zielfernrohres zu der waffenseitigen Grundschiene 10 kommt, und dass eine oberhalb der waffenseitigen Gegenplatte 12 angeordnete Justierplatte 11 in mindestens zwei zueinander senkrechten Ebenen einstellbar ausgebildet ist, an deren Oberseite die Trennebene 17 ausgebildet ist.

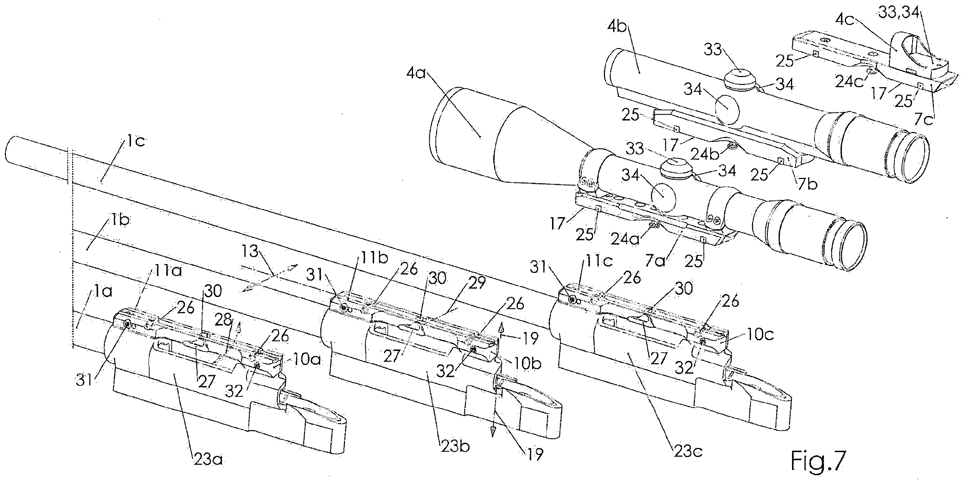

Die Figur 7 zeigt das erfindungsgemäße Austauschsystem für eine universelle Zielfernrohrmontage, wobei am Beispiel von drei verschiedenen Waffen 23a, 23b, 23c erläutert werden wird, dass auf jede der einzelnen Waffen 23a, 23b, 23c ein beliebiges Zielfernrohr 4a, 4b, 4c montiert werden kann.

Kennzeichnend für jede Waffe ist die so genannte waffenseitige Grundschiene 10, die gemäß der Zeichnung nach Figur 1 aus zwei zueinander einstellbaren Platten besteht, nämlich der Gegenplatte 12 die direkt auf dem Waffenlauf 1 montiert ist und einer darüber angeordneten Justierplatte 11, die einstellbar zu der Gegenplatte 12 ausgebildet ist.

Im gezeigten Ausführungsbeispiel ist die Gegenplatte 12 nicht sichtbar, sondern es ist nur die auf der Gegenplatte 12 einstellbar gehaltene Justierplatte 11a, 11b, 11c sichtbar.

Die drei Waffen werden jeweils mit den Kleinbuchstaben a, b, c bezeichnet. Gleiches gilt auch für die zugeordneten Zielfernrohrsysteme, die demnach ebenfalls mit den Kleinbuchstaben a, b, und c bezeichnet sind.

Weil alle Waffenbestandteile und alle Zielfernrohrbestandteile gleich ausgebildet sind, werden die entsprechenden Bezeichnungen in den Zeichnungen nur teilweise mit den Kleinbuchstaben a, b, c bezeichnet. Der besseren Übersichtlichkeit wegen, sind auch die gleichen Teile, mit den gleichen Bezugszeichen, aber an verschiedenen Waffen und deren Teilen bezeichnet.

Demnach ist auf jeder Waffe 1a, 1b, 1c die Justierplatte 11a, 11b, 11c einstellbar montiert. Die Einstellung erfolgt einmal in der Seiteneinstellrichtung 13 und zum Zweiten in der Höheneinstellrichtung 19.

Jedes Zielfernrohrsystem hat an seiner Unterseite eine Aufnahmeschiene 7a, 7b, 7c, die fest und nicht einstellbar an der Unterseite des Zielfernrohrs 4a, 4b, 4c befestigt ist.

Lediglich das Zielfernrohr selbst ist zu der Aufnahmeschiene 7a, 7b, 7c in der Höhe und in der Seite einstellbar. Dies ist mit der Höheneinstellung 33 und der Seiteneinstellung 34 an jedem Zielfernrohr 4 dargestellt.

Wichtig ist nun, dass die Aufnahmeschiene 7a, 7b, 7c direkt kuppelbar mit der Justierplatte 11 ist und dass im Kupplungsbereich keine Verstellmittel vorhanden sind. Es erfolgt eine verschiebungsfreie, formschlüssige Verbindung zwischen der zielfernrohrseitigen Aufnahmeschiene 7 und der waffenseitigen Justierplatte 11a, 11b, 11c dadurch, dass an der Unterseite der zielfernrohrseitigen Aufnahmeschiene 7 ein Verriegelungsbolzen 24a, 24b, 24c angeordnet ist, der in eine zugeordnete Klemmaufnahme 30 an der Oberseite der Justierplatte 11a, 11b, 11c eingreift und durch Schwenken des Klemmhebels 27 in den Pfeilrichtungen 28 um die Schwenkachse 29 herum festgelegt wird.

Die formschlüssige Kupplung der jeweiligen zielfernrohrseitigen Aufnahmeschiene 7 auf der waffenseitigen Justierplatte 11 erfolgt dann weiter dadurch, dass im Abstand und parallel zueinander an der Unterseite der zielfernrohrseitigen Aufnahmeschiene 7 zwei Nutensteine 25 angeordnet sind und zugeordnete, im Abstand voneinander angeordnete Quernuten 26 an der Oberfläche der Justierplatte 11 formschlüssig eingreifen und dort unverrückbar und spielfrei festgelegt sind.

Nach einer ersten Ausführungsform der vorliegenden Erfindung ist es vorgesehen, dass durch die Einstellmittel 33, 34 am Zielfernrohr und durch die unveränderten Einstellmittel an der Waffenseite (die Seiteneinstellschraube 31 und Höheneinstellschraube 32) nun eine Ausrichtung des Zielfernrohres in Bezug zum Waffenlauf 1 stattfindet.

Bei der auf der Justierplatte 11 gekuppelten Aufnahmeschiene 7 wird nun das Zielfernrohr durch Betätigung seiner Einstellmittel 33, 34 in Bezug zum Waffenlauf 1 ausgerichtet und die Waffe 23 wird damit eingeschossen.

Dieses Ausführungsbeispiel bezieht sich also auf die erste Möglichkeit einer universellen Einstellung, wie das mit den Einstellmitteln 33, 34 des Zielfernrohrs 4 und bei unveränderten Einstellmitteln 31, 32 auf der Waffenseite eine Ausrichtung des Zielfernrohrs auf dem Waffenlauf 1 stattfindet.

Eine zweite Ausführungsform der universellen Einstellbarkeit bezieht sich darauf, dass das Zielfernrohr 4 lediglich in einer mittleren, jedoch beliebigen Stellung der Einstellmittel des Zielfernrohrs gehalten wird und in dieser noch nicht justierten Stellung auf der waffenseitigen Justierplatte 11 gekuppelt wird.

Nunmehr wird mit einem Einstellvorgang und durch Betätigung der waffenseitigen Einstellmittel 31, 32 das Zielfernrohr mit dem Waffenlauf 1 auf das Ziel ausgerichtet und eingeschossen.

Beide Einstellarten sind gleichberechtigt und werden wahlweise vom Benutzer entweder in der einen oder in der anderen Art ausgeübt.

Im Folgenden wird nun die universelle Zielfernrohrmontage beschrieben.

Es wurde vorausgesetzt, dass das Zielfernrohr 4a auf der Waffe 23a nun ausgerichtet und eingeschossen ist.

Um eine universelle Umsetzbarkeit des gleichen Zielfernrohres 4a auf eine zweite Waffe 23b und/ oder eine dritte Waffe 23c zu ermöglichen werden folgende weitere Schritte veranlasst:
1. Das auf die Waffe 23a ausgerichtete und eingeschossene Zielfernrohr 4a wird nun von der Waffe 23a abgenommen und auf die Waffe 23b montiert. An den zielfernrohrseitigen Einstellmitteln 33, 34 wird nichts geändert.
2. Nach der erfolgten Kupplung des Zielfernrohrs 4a auf der Waffe 23b ist das Zielfernrohr 4a auf der Waffe 23b auf das Ziel eingeschossen, in dem die waffenseitigen Einstellmittel 31, 32 betätigt werden. Damit ist da Zielfernrohr 4a auch auf die Waffe 23b eingestellt und eingeschossen.
3. Der gleiche Vorgang gilt auch für die weitere Waffe 23c, die nur beispielhaft dargestellt ist, weil es beliebig viele Waffen gibt und beliebig viele Zielfernrohre, die auf den Waffen montiert werden können.

Auch hier erfolgt in dem nächsten Schritt die Entkopplung des Zielfernrohrs 4a von der Waffe 23b und das Zielfernrohr 4a wird nun auf die Waffe 23c aufgesetzt und die Waffe 23c wird durch Betätigung der waffenseitigen Einstellmittel 31, 32 mit dem Zielfernrohr 4a eingeschossen.

Soll nun das auf der Waffe 23c das montierte Zielfernrohr 4a wieder mit der Waffe 23a verwendet werden, reicht es aus, das Zielfernrohr 4a mit seiner zielfernrohrseitigen Aufnahmeschiene 7 auf der waffenseitigen Justierplatte 11 formschlüssig (und damit verschiebungsfrei) zu koppeln, ohne dass es notwendig ist, an den zielfernrohrseitigen Einstellmitteln 33, 34 oder den waffenseitigen Einstellmitteln 31, 32 etwas zu verändern.

Man kann also das Zielfernrohr 4a auf beliebige Waffen 23a, 23b, 23c aufsetzen und kuppeln, weil alle waffenseitigen Grundschienen 10 auf das jeweilige Zielfernrohr 4a ausgerichtet sind.

Der gleiche Vorgang gilt auch für alle übrigen Systeme.

Wenn nun jedes weitere andere Zielfernrohr, z. B. das Zielfernrohr 4b oder 4c auf den Waffen 23a, 23b, 23c montiert werden soll, gilt folgendes:
Das zweite oder dritte Zielfernrohr 4b, 4c mit der nicht einstellbar ausgebildeten zielfernrohrseitigen Aufnahmeschiene 7b, 7c wird nun auf eine beliebige waffenseitige Grundschiene 10a, 10b, 10c mit der fest eingestellten Justierplatte 11a, 11b, 11c aufgesetzt und gekoppelt.

Wichtig ist nun, dass nun an den waffenseitigen Einstellmitteln 31, 32 nichts verändert wird, sondern dass nur noch für das zweite und dritte Zielfernrohr die zielfernrohrseitigen Einstellmittel 33, 34 bei erfolgter Montage auf der Waffe 23a verändert werden. Demnach wird das Zielfernrohr 4b auf die Waffe 23a eingestellt. Somit passt nun dieses zweite Zielfernrohr 4b und in einer logischen Weise auch das dritte Zielfernrohr 4c auf alle mit dem Zielfernrohr 4a eingeschossenen Waffen 23a, 23b, 23c.

Sobald nämlich das Zielfernrohr 4b auf eine Waffe z.B. der Waffe 23a eingeschossen wurde, in dem die zielfernrohrseitigen Einstellmittel 33, 34 betätigt wurden, muss beim Umsetzen des zweiten Zielfernrohrs 4b oder des dritten Zielfernrohrs 4c auf die weiteren Waffen 23b und 23c eine erneute Einstellung der zielfernrohrseitigen Einstellmittel 33, 34 nicht mehr erfolgen. Ebenso ist es dann nicht mehr notwendig, dass auch die waffenseitigen Einstellmittel 31, 32 betätigt werden.

Hieraus ergibt sich die Bedeutung der universellen Zielfernrohrmontage, denn es ist bei jedem zweiten und dritten und allen weiteren Zielfernrohren nur notwendig dieses zweite und dritte Zielfernrohr 4b, 4c einmal auf eine einzige Waffe, z. B. die Waffe 23a einzustellen, wobei hierbei die zielfernrohrseitigen Einstellmittel 33, 34 betätigt werden und danach kann das Zielfernrohr 4b und alle weiteren Zielfernrohre auf beliebige weitere Waffen 23b und 23c umgesetzt werden, ohne dass an den waffenseitigen Einstellungen 31, 32 und/ oder den zielfernrohrseitigen Einstellmitteln 33, 34 etwas verändert werden muss.

Vorteil der universellen Zielfernrohrmontage ist, dass der Benutzer nun eine Anzahl von Waffen vorhalten kann, z. B. die Waffen 23a, 23b und 23c und eine Vielzahl von unterschiedlichen Zielfernrohren 4a, 4b, 4c besitzt.

Er kann nun in beliebiger Weise jedes einzelne Zielfernrohr auf jede einzelne Waffe montieren, ohne noch an den zielfernrohrseitigen Einstellmitteln 33, 34 oder den waffenseitigen Einstellmitteln 31, 32 etwas ändern zu müssen. Damit wird vermieden, dass jeder Waffe fest ein einzelnes Zielfernrohr zugeordnet werden muss, welches nur allein auf dieser Waffe eingeschossen ist und welches nicht mehr während der gesamten Benutzungsdauer der Waffe von der Waffe heruntergenommen und für andere Waffen verwendet werden kann.

Dies ist demnach mit dem Vorteil verbunden, dass teure Zielfernrohre verwendet werden können und ein einziges teures Zielfernrohr für eine Vielzahl von Waffen verwendbar ist, wodurch sich der universelle Einsatzzweck ergibt.

Die Kupplung zwischen dem Zielfernrohr und der Waffenseite erfolgt immer werkzeuglos durch die Betätigung des Hebels 27.

Mit der Erfindung wird also eine Komptabilität von Waffen zu einer beliebigen Anzahl von Zielfernrohren erreicht, was bisher nicht möglich war.

Wird die Waffe z.B. als Jagdwaffe verwendet, ist es bekannt, dass der Jäger vorzugsweise drei unterschiedliche Zielfernrohre benutzt, die an die Art der Jagd angepasst sind. Es handelt sich dann zum Beispiel um ein Ansitzglas, ein Drückjagdglas und ein Reflexvisier in jeweils hochwertiger Ausführung mit hohem Restlichtverstärkungsgrad. Nun ist es erstmals möglich, solche hochwertigen Gläser auf einer Vielzahl von Jagdwaffen zu verwenden, ohne dass es aufwendiger Umstellarbeiten bedarf und es zu einem Präzisionsverlust kommt.

### Zeichnungslegende

- 1: Waffenlauf (Systemkasten/Basküle/Verschlusskasten, Hülse)
- 2: Längsachse
- 3: Pfeilrichtung
- 4: Zielfernrohr
- 5: optische Achse
- 6: Pfeilrichtung
- 7: Aufnahmeschiene (Zielfernrohr 4)
- 8: Längsachse (von 7)
- 9: Oberteil
- 10: Grundschiene (waffenseitig)
- 11: Justierplatte 11a
- 12: Gegenplatte 12a
- 13: Abweichungswinkel (X-Ebene)
- 14: Einstellmittel
- 15: Einstellmittel
- 16: Einstellmittel
- 17: Trennebene
- 18: Einstellweg
- 19: Abweichungswinkel (Höhe)
- 20:
- 21: Längsachse (von 11)
- 22: Längsachse (von 12)
- 23: Waffe
- 24: Verriegelungsbolzen
- 25: Nutensteine
- 26: Quernuten
- 27: Klemmhebel
- 28: Pfeilrichtung
- 29: Schwenkachse
- 30: Klemmaufnahme
- 31: Waffenseitiges Einstellmittel (Seiteneinstellschraube)
- 32: Waffenseitiges Einstellmittel (Höheneinstellschraube)
- 33: Zielfernrohrseitiges Einstellmittel
- 34: Zielfernrohrseitiges Einstellmittel

## Patentansprüche

1. Montage für ein Zielfernrohr für Handfeuerwaffen bestehend aus
1.1 mindestens einer auf einer Waffe (23a, 23b, 23c) befestigbaren Grundschiene (10),
1.2 die mit einer am Zielfernrohr (4a, 4b, 4c) verbundenen Befestigung lösbar verbindbar ist,
1.3 wobei die auf der mindestens einen Waffe (23a, 23b, 23c) montierbare Grundschiene (10) mindestens aus einer waffenseitigen Gegenplatte (12, 12a) besteht, die mit der mindestens einen Waffe (23a, 23b, 23c) verbindbar ist,
1.4 und aus einer auf der Gegenplatte (12, 12a) in mindestens zwei zueinander senkrechten Ebenen einstellbar gehaltenen Justierplatte (11, 11a) besteht,
1.5 sowie aus einer Aufnahmeschiene (7), die auf der Justierplatte (11, 11a) mit Befestigungselementen lösbar auf der Justierplatte (11, 11a) befestigbar ist,
1.6 auf der das Zielfernrohr (4a, 4b, 4c) über die Aufnahmeschiene (7) lösbar befestigt ist,
1.7 wobei an der Oberseite der Justierplatte (11, 11a) eine Trennebene (17) ausgebildet ist, in deren Bereich das Zielfernrohr (4a, 4b, 4c) mit seiner Aufnahmeschiene (7) von der Waffe (23a, 23b, 23c) entfernbar ist, **dadurch gekennzeichnet, dass**
1.8 die Zuordnung der Einstellung der Justierplatte (11, 11a) zu der stets fest waffenseitig verbundenen Gegenplatte (12, 12a) für diese und andere Waffen (23a, 23b, 23c) und das Zielfernrohr (4a, 4b, 4c) gleich bleibt,
1.9 dadurch dass eine verschiebungsfreie, formschlüssige Verbindung zwischen der zielfernrohrseitigen Aufnahmeschiene (7) und der waffenseitigen Justierplatte (11a, 11b, 11c) dadurch erfolgt, dass an der Unterseite der zielfernrohrseitigen Aufnahmeschiene (7) ein Verriegelungsbolzen (24a, 24b,
24c) angeordnet ist, der in eine zugeordnete Klemmaufnahme (30) an der Oberseite der Justierplatte (11a, 11b, 11c) eingreift und durch Schwenken des Klemmhebels (27) um die Schwenkachse (29) herum festgelegt wird.

2. Montage für ein Zielfernrohr für Handfeuerwaffen bestehend aus
2.1 mindestens einer auf einer Waffe (23a, 23b, 23c) befestigbaren Grundschiene (10),
2.2 die mit einer am Zielfernrohr (4a, 4b, 4c) verbundenen Befestigung lösbar verbindbar ist,
2.3 wobei die auf der mindestens einen Waffe (23a, 23b, 23c) montierbare Grundschiene (10) mindestens aus waffenseitigen Halterungselementen besteht, die mit der mindestens einen Waffe (23a, 23b, 23c) verbindbar sind,
2.4 und aus einer auf den Halterungselementen in mindestens zwei zueinander senkrechten Ebenen einstellbar gehaltenen Justierplatte (11, 11a) besteht,
2.5 sowie aus zielfernrohrseitigen Halterungselementen, die lösbar auf der Justierplatte (11, 11a) befestigbar sind,
2.6 wobei auf der Justierplatte (11, 11a) das Zielfernrohr (4a, 4b, 4c) über die zielfernrohrseitigen Halterungselemente lösbar befestigt ist,
2.7 wobei an der Oberseite der Justierplatte (11, 11a) eine Trennebene (17) ausgebildet ist, in deren Bereich das Zielfernrohr (4a, 4b, 4c) mit seinen zielfernrohrseitigen Halterungselementen von der Waffe (23a, 23b, 23c) entfernbar ist, **dadurch gekennzeichnet, dass**
2.8 die Zuordnung der Einstellung der Justierplatte (11, 11a) zu den stets fest waffenseitigen Halterungselementen für diese und andere Waffen (23a, 23b, 23c) und das Zielfernrohr (4a, 4b, 4c) gleich bleibt,
2.9 wodurch eine verschiebungsfreie, formschlüssige Verbindung zwischen den zielfernrohrseitigen Halterungselementen und der waffenseitigen Justierplatte (11a, 11b, 11c) dadurch erfolgt, dass an der Unterseite der zielfernrohrseitigen Halterungselemente ein Verriegelungsbolzen (24a, 24b, 24c) angeordnet ist, der in eine zugeordnete Klemmaufnahme (30) an der Oberseite der Justierplatte (11a, 11b, 11c) eingreift und durch Schwenken des Klemmhebels (27) um die Schwenkachse (29) herum festgelegt wird.

3. Montage nach Anspruch 1 oder 2, **dadurch gekennzeichnet, dass** die formschlüssige Kupplung der jeweiligen zielfernrohrseitigen Aufnahmeschiene (7) auf der waffenseitigen Justierplatte (11) weiter dadurch erfolgt, dass im Abstand und parallel zueinander an der Unterseite der zielfernrohrseitigen Aufnahmeschiene (7) zwei Nutensteine (25) angeordnet sind und zugeordnete, im Abstand voneinander angeordnete Quernuten (26) an der Oberfläche der Justierplatte (11) formschlüssig eingreifen und dort unverrückbar und spielfrei festgelegt sind.

4. Montage nach einem der Ansprüche 1 bis 3, **dadurch gekennzeichnet, dass** die Kupplung zwischen dem Zielfernrohr und der Waffenseite werkzeuglos durch die Betätigung des Klemmhebels (27) erfolgt.

## Claims

1. Mounting for a telescopic sight for hand-held weapons consisting of
1.1 at least one base rail (10) which can be fixed on a weapon (23a, 23b, 23c),
1.2 and which can be releasably connected using an attachment connected to the telescopic sight (4a, 4b, 4c),
1.3 wherein the base rail (10) which can be mounted on the at least one weapon (23a, 23b, 23c) consists at least of a weapon-side counter-plate (12, 12a) which can be connected to the at least one weapon (23a, 23b, 23c),
1.4 and consists of an adjusting plate (11, 11a) adjustably mounted on the counter-plate (12, 12a) in at least two planes which are vertical to one another,
1.5 and of a receiving rail (7) which can be fixed releasably on the adjusting plate (11, 11a) using attachment elements on the adjusting plate (11, 11a),
1.6 on which the telescopic sight (4a, 4b, 4c) is fixed releasably via the receiving rail (7),
1.7 wherein on the upper side of the adjusting plate (11, 11a) is formed a separating plane (17) in the area of which the telescopic sight (4a, 4b, 4c) using its receiving rail (7) can be removed from the weapon (23a, 23b, 23c), **characterised in that**
1.8 the assignment of adjustment of the adjusting plate (11, 11a) to the counter-plate (12, 12a) always firmly connected on the weapon side remains the same for this and other weapons (23a, 23b, 23c) and the telescopic sight (4a, 4b, 4c),
1.9 **in that** a displacement-free, positive connection is effected between the telescopic sight-side receiving rail (7) and the weapon-side adjusting plate (11a, 11b, 11c) **in that** on the underside of the telescopic sight-side receiving rail (7) is arranged a locking bolt (24a, 24b, 24c) which engages in an assigned clamping receiver (30) on the upper side of the adjusting plate (11a, 11b, 11c) and is fixed by pivoting the clamping lever (27) about the pivoting axis (29).

2. Mounting for a telescopic sight for hand-held weapons consisting of
2.1 at least one base rail (10) which can be fixed on a weapon (23a, 23b, 23c),
2.2 and which can be releasably connected using an attachment connected to the telescopic sight (4a, 4b, 4c),
2.3 wherein the base rail (10) which can be mounted on the at least one weapon (23a, 23b, 23c) consists at least of weapon-side mounting elements which can be connected to the at least one weapon (23a, 23b, 23c),
2.4 and consists of an adjusting plate (11, 11a) adjustably mounted on the mounting elements in at least two planes which are vertical to one another,
2.5 and of telescopic sight-side mounting elements which can be fixed releasably on the adjusting plate (11, 11a),
2.6 wherein the telescopic sight (4a, 4b, 4c) is fixed releasably on the adjusting plate (11, 11a) via the telescopic sight-side mounting elements,
2.7 wherein on the upper side of the adjusting plate (11, 11a) is formed a separating plane (17) in the area of which the telescopic sight (4a, 4b, 4c) can be removed from the weapon (23a, 23b, 23c) using its telescopic sight-side mounting elements, **characterised in that**
2.8 the assignment of adjustment of the adjusting plate (11, 11a) to the always fixed weapon-side mounting elements remains the same for this and other weapons (23a, 23b, 23c) and the telescopic sight (4a, 4b, 4c),
2.9 whereby a displacement-free, positive connection is effected between the telescopic sight-side mounting elements and the weapon-side adjusting plate (11a, 11b, 11c) **in that** on the underside of the telescopic sight-side mounting elements is arranged a locking bolt (24a, 24b, 24c) which engages in an assigned clamping receiver (30) on the upper side of the adjusting plate (11a, 11b, 11c) and is fixed by pivoting the clamping lever (27) about the pivot axis (29).

3. Mounting according to claim 1 or 2, **characterised in that** the positive coupling of the respective telescopic sight-side receiving rail (7) on the weapon-side adjusting plate (11) is further effected **in that** two sliding blocks (25) are arranged at a distance and parallel to one another on the underside of the telescopic sight-side receiving rail (7) and assigned transverse grooves (26) arranged at a distance from one another engage positively on the surface of the adjusting plate (11) and are fixed there to be immovable and free from play.

4. Mounting according to one of claims 1 to 3, **characterised in that** the coupling between the telescopic sight and the weapon side is effected without a tool by actuating the clamping lever (27).

## Revendications

1. Montage pour une lunette de visée pour armes de poing, composé
1.1 d'au moins un rail de base (10) apte à être fixé sur une arme (23a, 23b, 23c) et
1.2 apte à être relié de manière amovible à une fixation reliée à la lunette de visée (4a, 4b, 4c),
1.3 le rail de base (10) apte à être monté sur la ou les armes (23a, 23b, 23c) se composant au moins d'une contre-plaque (12, 12a), située côté arme, qui est apte à être reliée à l'arme ou aux armes (23a, 23b, 23c),
1.4 et d'une plaque d'ajustement (11, 11a) retenue de manière réglable sur la contre-plaque (12, 12a) dans au moins deux plans perpendiculaires,
1.5 ainsi que d'un rail de réception (7) qui est apte à être fixé de manière amovible avec des éléments de fixation sur la plaque d'ajustement (11, 11a)
1.6 sur laquelle la lunette de visée (4a, 4b, 4c) est fixée de manière amovible par l'intermédiaire du rail de réception (7),
1.7 étant précisé qu'il est prévu sur la face supérieure de la plaque d'ajustement (11, 11a) un plan de séparation (17) dans la zone duquel la lunette de visée (4a, 4b, 4c) avec son rail de réception (7) peut être enlevée de l'arme (23a, 23b, 23c), **caractérisé en ce que**
1.8 l'association du réglage de la plaque d'ajustement (11, 11a) à la contre-plaque (12, 12a) toujours reliée solidement côté arme restant la même pour ces armes et d'autres armes (23a, 23b, 23c) et la lunette de visée (4a, 4b, 4c),
1.9 du fait qu'une liaison par complémentarité de forme, sans coulissement, entre le rail de réception (7) situé côté lunette de visée et la plaque d'ajustement (11a, 11b, 11c) située côté arme est réalisée grâce au fait qu'il est prévu sur la face inférieure du rail de réception (7) situé côté lunette de visée une tige de verrouillage (24a, 24b, 24c) qui pénètre dans un logement de serrage associé (30), sur la face supérieure de la plaque d'ajustement (11a, 11b, 11c), et est immobilisée grâce à un pivotement du levier de serrage (27) sur l'axe de pivotement (29).

2. Montage pour une lunette de visée pour armes de poing, composé
2.1 d'au moins un rail de base (10) apte à être fixé sur une arme (23a, 23b, 23c) et
2.2 apte à être relié de manière amovible à une fixation reliée à la lunette de visée (4a, 4b, 4c),
2.3 le rail de base (10) apte à être monté sur la ou les armes (23a, 23b, 23c) se composant au moins d'éléments d'attache, situés côté arme, qui sont aptes à être reliés à l'arme ou aux armes (23a, 23b, 23c),
2.4 et d'une plaque d'ajustement (11, 11a) retenue de manière réglable sur les éléments d'attache dans au moins deux plans perpendiculaires,
2.5 ainsi que d'éléments d'attache, situés côté lunette de visée, qui sont aptes à être fixés de manière amovible avec des éléments de fixation sur la plaque d'ajustement (11, 11a),
2.6 étant précisé que sur la plaque d'ajustement (11, 11a), la lunette de visée (4a, 4b, 4c) est fixée de manière amovible par l'intermédiaire des éléments d'attache situés côté lunette de visée,
2.7 étant précisé qu'il est prévu sur la face supérieure de la plaque d'ajustement (11, 11a) un plan de séparation (17) dans la zone duquel la lunette de visée (4a, 4b, 4c) avec ses éléments d'attache situés côté lunette de visée peut être enlevée de l'arme (23a, 23b, 23c), **caractérisé en ce que**
2.8 l'association du réglage de la plaque d'ajustement (11, 11a) aux éléments d'attache situés côté arme qui sont toujours reliés solidement restant la même pour ces armes et d'autres armes (23a, 23b, 23c) et la lunette de visée (4a, 4b, 4c),
2.9 moyennant quoi une liaison par complémentarité de forme, sans coulissement, entre les éléments d'attache situés côté lunette de visée et la plaque d'ajustement (11a, 11b, 11c) située côté arme est réalisée grâce au fait qu'il est prévu sur la face inférieure des éléments d'attache situés côté lunette de visée une tige de verrouillage (24a, 24b, 24c) qui pénètre dans un logement de serrage associé (30), sur la face supérieure de la plaque d'ajustement (11a, 11b, 11c), et est immobilisée grâce à un pivotement du levier de serrage (27) sur l'axe de pivotement (29).

3. Montage selon la revendication 1 ou 2, **caractérisé en ce que** l'accouplement par complémentarité de forme du rail de réception (7) situé côté lunette de visée sur la plaque d'ajustement (11) située côté arme est réalisé également grâce au fait qu'il est prévu sur la face inférieure du rail de réception (7) situé côté lunette de visée deux coulisseaux (25) espacés et parallèles qui entrent par complémentarité de forme dans des rainures transversales (26) associées, sur la surface de la plaque d'ajustement (11), et sont immobilisés dans celles-ci de manière inamovible et sans jeu.

4. Montage selon l'une des revendications 1 à 3, **caractérisé en ce que** l'accouplement entre la lunette de visée et le côté de l'arme se fait sans outil, grâce à l'actionnement du levier de serrage (27).
